# EUROPÄISCHE PATENTANMELDUNG

(11) **EP 4 815 272 A1**
(43) Veröffentlichungstag der Anmeldung: **30.09.2026**
(21) Anmeldenummer: 25166886.9
(22) Anmeldetag: 28.03.2025
(51) Int. Cl.: H02K 11/04, H02K 11/20, H02K 11/25, H02K 11/33, H02P 27/06, H02P 29/68, H02K 5/16, H02K 7/08, H02K 11/05

(54) **UMRICHTERMOTOR UND SIMULATIONSPROGRAMMPRODUKT**

(71) Anmelder: Innomotics GmbH, 90441 Nürnberg (DE)
(72) Erfinder: TISCHMACHER, Hans, 91207 Lauf (DE); KOCH, Thomas, 90459 Nürnberg (DE); DEEG, Christian, 90518 Altdorf (DE); LEHNER, Johannes, 90762 Fürth (DE); STEINMÜLLER, Marco, 97638 Mellrichstadt (DE); KATZENBERGER, Tobias, 97631 Bad Königshofen STT Untereßfeld (DE); JORDAN, Philipp, 96114 Hirschaid (DE); WARMUTH, Matthias, 97618 Windshausen (DE)
(74) Vertreter: Michalski Hüttermann & Partner mbB

(57) **Zusammenfassung**

Die Erfindung betrifft einen Umrichtermotor (10), der ein Gehäuse (22), einen Motor (20) mit einem Stator (24) und einem Rotor (26) auf einer Rotorwelle (23) umfasst. Die Rotorwelle (23) ist auf zwei Lagern (28) drehbar gelagert. Der Umrichtermotor (10) umfasst weiter einen Umrichter (30), wobei der Stator (24), der Rotor (26) und der Umrichter (30) im Gehäuse (22) aufgenommen sind. Erfindungsgemäßen ist der Umrichter (30) mit dem Rotor (26) und dem Stator (24) in einem gemeinsamen Motorraum (25) im Gehäuse (22) zwischen den Lagern (28) angeordnet. Die Erfindung betrifft auch ein Simulationsprogrammprodukt (60) des Umrichtermotors (10), das als Digitaler Zwilling (65) ausgebildet sein kann.

## Beschreibung

Die Erfindung betrifft einen Umrichtermotor und ein Simulationsprogrammprodukt zum Simulieren eines Betriebsverhaltens eines derartigen Umrichtermotors.

Aus der Patentanmeldung DE 10 2005 032 964 A1 ist ein Umrichtermotor bekannt, bei dem der Umrichter in mehrere Leiterplatten eingeteilt ist, die gelenkig miteinander verbunden sind. Die Leiterplatten sind im montierten Zustand im Gehäuse des Umrichtermotors angeordnet.

Elektromotoren werden in erheblichen Stückzahlen in unterschiedlichen technischen Anwendungsgebieten verwendet. Es wird eine erhöhte Energieeffizienz, Langlebigkeit, Kosteneffizienz und Wartungsfreundlichkeit für solche Elektromotoren, insbesondere auch für Umrichtermotoren, angestrebt. Gleichermaßen wird eine verbesserte Vorhersagbarkeit von Wartungs- und Reparaturvorgängen angestrebt. Der Erfindung liegt die Aufgabe zugrunde, einen Umrichtermotor bereitzustellen, der in zumindest einem dieser Aspekte eine Verbesserung bietet. Ebenso liegt der Erfindung die Aufgabe zugrunde, eine Möglichkeit bereitzustellen, die Vorhersagbarkeit von Wartungs- und Reparaturvorgängen zu verbessern.

Die Aufgabenstellung wird durch einen erfindungsgemäßen Umrichtermotor gelöst. Der Umrichtermotor umfasst ein Gehäuse, in dem ein Motor aufgenommen ist, der als sogenannte aktive Komponenten einen Stator und einen Rotor umfasst. Der Rotor sitzt hierbei auf einer Rotorwelle, die drehbar auf zwei Lagern angeordnet ist, die ebenso zum Umrichtermotor gehören. Weiter gehört ein Umrichter zum Umrichtermotor, der ebenso im Gehäuse aufgenommen ist. Erfindungsgemäß sind der Umrichter, der Rotor und der Stator in einem gemeinsamen Motorraum im Gehäuse angeordnet. Der Umrichter ist hierbei zwischen den Lagern aufgenommen, in denen die Rotorwelle drehbar gelagert ist. Der Umrichter befindet sich hierbei, entlang einer Axialrichtung, die sich im Wesentlichen entlang der Rotorwelle erstreckt, zwischen den Lagern. Die Lager können jeweils in einem Lagerschild aufgenommen sein, durch die das Gehäuse jeweils stirnseitig begrenzt ist. Unter dem gemeinsamen Motorraum ist insbesondere ein zusammenhängender lichter Raum zu verstehen, in dem sich Komponenten des Umrichters und Komponenten des Stators und/oder Rotors im Wesentlichen direkt gegenüberliegen, insbesondere in Axialrichtung betrachtet.

Hierdurch ist ein räumlicher Abstand zwischen dem Umrichter und dem Rotor und dem Stator minimiert. Dadurch ist der Umrichter im beanspruchten Umrichtermotor über Kontaktierungen mit Anschlussklemmen des Motors, beispielsweise mit Statorwindungen, verbunden. Die Kontaktierungen können hierbei als direkte Kontaktierungen ausgebildet sein und frei von zusätzlichen Verbindungskabeln sein. Des Weiteren kann eine elektrische Verbindung zwischen dem Umrichter und den Anschlussklemmen des Motors innerhalb des Gehäuses des Umrichtermotors angeordnet sein. Dadurch wird die Anbindung an die Energieversorgung des Netzbetreibers sichergestellt. Die elektrische Verbindung zwischen dem Umrichter und dem Motor kann beispielsweise durch einen Steckkontakt ausgebildet sein. Hierdurch liegt zwischen dem Umrichter und dem Motor eine elektrische Verbindung mit definierten Eigenschaften vor, was eine präzise und koordinierte Ansteuerung des Umrichters und des Motors erlaubt, mit der deren technische Potentiale stärker ausschöpfbar sind. Ferner liegt zwischen dem Umrichter, insbesondere einem Zwischenkreis des Umrichters, und dem Motor, durch die direkte Kontaktierung, eine verringerte Impedanz vor.

Die Impedanz zwischen dem Stator und dem Zwischenkreis des Umrichters ist hierbei geringer als jeweils die Impedanz zwischen dem Stator und dem Erdungssystem, in dem das Antriebssystem eingebettet ist. Dadurch werden Erdströme, die über den Weg Stator - Lager - Antriebswelle - Lasteinrichtung/Applikation fließen, minimiert oder sogar verhindert. Ströme, die infolge von parasitären Kapazitäten im Motor hervorgerufen werden können, und über die Lager abfließen, werden so verringert oder sogar verhindert. Infolgedessen wird eine Degradation der Lager, beispielsweise infolge von Mikroverschweißungen zwischen Wälzkörpern und Laufbahnen in den Lagerringen, reduziert. Die Anordnung des Umrichters zwischen den Lagern dient folglich zur Reduzierung einer Degradation der Lager des Umrichtermotors.

Bei einem Betrieb des Umrichtermotors fallen unterschiedliche Verluste im Umrichter und im Motor an. Je höher eine Schaltfrequenz des Umrichters ist, also der Halbleiterschalter in dessen Wechselrichter, umso niedriger sind anfallende Motorverluste. Gleichzeitig sind Umrichterverluste umso höher, je höher dessen Schaltfrequenz ist. Korrespondierend sind Motorverluste umso höher, je niedriger die Schaltfrequenz des Umrichters ist. Entsprechend sind die Umrichterverluste umso niedriger, je niedriger die Schaltfrequenz des Umrichters ist. Da die Komponenten des Umrichtermotors - sowie die elektrische Verbindung exakt definiert sind, kann der Umrichtermotor präzise und koordiniert angesteuert werden, beispielsweise um die thermische Belastbarkeit des Umrichters und/oder des Motors auszunutzen. Die Anordnung des Umrichters zwischen den Lagern dient folglich auch einer gesteigerten Ausnutzung der thermischen Kapazitäten des Umrichters und/oder Motors. Hierbei kann der Motor eine höhere thermische Kapazität aufweisen als der Umrichter.

Darüber hinaus werden Spannungsanstiege an den Motorklemmen, die durch einen gepulsten Umrichterbetrieb hervorgerufen werden, durch die definierte und niederimpedante elektrische Verbindung zwischen dem Umrichter und dem Motor verringert, Spannungsüberhöhungen aufgrund von Kabelreflektionen treten nicht auf. Infolgedessen werden elektrische Beanspruchungen von Isolierungen im Motor, insbesondere von Nut- und Phasenisolation, verringert. Die Anordnung des Umrichters zwischen den Lagern dient dadurch zu einer Reduzierung der elektrischen Beanspruchung der Isolierungen im Motor

Dadurch, dass zumindest eines der Lager von außen zugänglich an einem Lagerschild angebracht sein kann, ist es vereinfacht zugänglich. Hierdurch wird auch die Wartungsfreundlichkeit des beanspruchten Umrichtermotors gesteigert.

In einer Ausführungsform des beanspruchten Umrichtermotors ist ein Zwischenraum zwischen dem Umrichter und dem Rotor im Wesentlichen trennwandungsfrei ausgebildet. Eine derartige Trennwand kann mit dem Gehäuse einstückig ausgebildet sein. Hierdurch ist der Abstand zwischen dem Umrichter und dem Rotor, und damit auch zwischen dem Umrichter und dem Stator, minimiert. Hierdurch wird die Impedanz zwischen dem Umrichter und dem Motor weiter reduziert. Die Impedanz zwischen dem Stator und dem Zwischenkreis ist dadurch im Wesentlichen als bekannt und definierbar annehmbar, was wiederum eine Modellierung des zugehörigen elektrischen Betriebsverhaltens vereinfacht. Demzufolge ist der beanspruchte Umrichtermotor, insbesondere dessen Verhalten bei Einwirkung elektrischer Störungen, in einfacher Weise modellierbar und berechenbar. Eine zusätzliche Verkabelung zwischen dem Umrichter und dem Motor sowie deren Modellierung sind entbehrlich. Dies wiederum erlaubt eine vereinfachte und gleichzeitig effizientere Parametrierung des beanspruchten Umrichtermotors.

In einer weiteren Ausführungsform des beanspruchten Umrichtermotors weist dieser zumindest einen Temperatursensor auf, der im Gehäuse angeordnet ist und dazu ausgebildet ist, eine Betriebstemperatur des Umrichters, des Stators und/oder des Rotors zu erfassen. Durch die Bauform des beanspruchten Umrichtermotors liegen thermisch im Wesentlichen konsistente Bedingungen im Gehäuse vor, die zuverlässig und präzise messbar sind. Basierend auf entsprechenden Messwerten vom mindestens einen Temperatursensor, also Temperaturmesswerten, kann der beanspruchte Umrichtermotor bedarfsgerecht parametriert und/oder angesteuert werden. Dementsprechend ist der beanspruchte Umrichtermotor dahingehend parametrierbar, dass die darin eingesetzten Komponenten, beispielsweise von Halbleiterschaltern im Umrichter, stärker ausgenutzt werden. Das Leistungspotential des Umrichtermotors wird so stärker ausgenutzt. In einer bevorzugten Ausführungsform des beanspruchten Umrichtermotors sind jeweils der Umrichter und der Motor, also der Rotor und/oder der Stator, mit einem Temperatursensor versehen. Alternativ oder ergänzend kann ein thermisches Modell des Umrichtermotors vorgesehen sein, das dazu ausgebildet ist, anhand von Messwerten des zumindest einen Temperatursensors eine vorliegende Temperatur am Motor, also dem Rotor und/oder Stator, bzw. am Umrichter zu ermitteln. Weiter alternativ oder ergänzend kann der beanspruchte Umrichtermotor mit einer Steuereinheit ausgestattet sein, die dazu ausgebildet ist, in Abhängigkeit von Messwerten des zumindest einen Temperatursensors eine Schaltfrequenz des Umrichters vorzugeben. Dies kann beispielsweise eine Schaltfrequenz von Halbleiterschaltern im Wechselrichter des Umrichters sein. Je niedriger die Schaltfrequenz des Umrichters ist, umso niedriger sind die anfallenden Umrichterverluste. Je höher die Schaltfrequenz des Umrichters ist, umso niedriger sind die anfallenden Motorverluste. Dementsprechend ist das technische Potential des beanspruchten Umrichtermotors durch den zumindest einen Temperatursensor genauer, prozesssicherer, und damit insgesamt stärker ausnutzbar. Die Steuereinheit kann hierzu mit einem Computerprogrammprodukt ausgestattet sein, das bei seiner Ausführung ein entsprechendes Betriebsverfahren des Umrichtermotors umsetzt.

Des Weiteren kann beim beanspruchten Umrichtermotor die Steuereinheit dazu ausgebildet sein, die Schaltfrequenz des Umrichters, also von Halbleiterschaltern eines Wechselrichters des Umrichters, zur psychoakustischen Optimierung einer Geräuschemission des Umrichtermotors vorzugeben. Geräuschemissionen werden von Menschen in Abhängigkeit verschiedener akustischer Parameter unterschiedlich erträglich oder unerträglich wahrgenommen. Auf der Steuereinheit kann hierzu ein Algorithmus ausführbar gespeichert sein, der zu einer psychoakustischen Optimierung von anfallenden Geräuschemissionen während eines Betriebs des Umrichtermotors zu erzielen. Der Algorithmus kann beispielsweise als Auswahlalgorithmus ausgebildet sein, der aus einer Tabelle oder einem Kennfeld, das den vorliegenden Betriebszustand charakterisiert, einen geeigneten Parametersatz, insbesondere für die Schaltfrequenz, auswählt. Alternativ oder ergänzend kann der Algorithmus als eine entsprechende Künstliche Intelligenz ausgebildet sein. Der Algorithmus kann dazu ausgebildet sein, eine zu erwartende Geräuschemission des Umrichters in Abhängigkeit von der Schaltfrequenz zu bestimmen. Durch den Aufbau des beanspruchten Umrichtermotors ist dessen elektrisches Verhalten, und infolgedessen auch sein akustisches Betriebsverhalten, präzise modellierbar. Der beanspruchte Umrichtermotor ist so in seinem Geräuschemissionsverhalten an ein Gesundheitsbedürfnis und/oder Komfortbedürfnis von Personen in dessen Umgebung zielgerichtet anpassbar. Auch hierzu kann die Steuereinheit mit einem entsprechend ausgebildeten Computerprogrammprodukt ausgestattet sein. Das Computerprogrammprodukt kann weiter dazu ausgebildet sein, die psychoakustische Optimierung in Abhängigkeit von weiteren Betriebsbedingungen des Umrichtermotors, beispielsweise der vorliegenden thermischen Belastung, zu priorisieren.

Alternativ oder ergänzend kann die Steuereinheit des beanspruchten Umrichtermotors dazu ausgebildet sein, die Schaltfrequenz des Umrichters, also der Halbleiterschalter im Wechselrichter, zu einem Minimieren einer Entladungsaktivität, insbesondere einer Teilentladungsaktivität, vorzugeben. Ebenso kann die Steuereinheit dazu ausgebildet sein, einen Bremsvorgang am Umrichtermotor zu steuern, so dass ein Anstieg einer Zwischenkreisspannung minimiert wird. Die Steuereinheit kann hierzu mit einem entsprechend ausgebildeten Computerprogrammprodukt ausgestattet sein. Durch das Minimieren der Entladungsaktivität kann eine Beanspruchung von Isolierungen, insbesondere der Isolierungen von Motorwicklungen, so minimiert werden. Das Vorgeben der Schaltfrequenz des Umrichters ist in Abhängigkeit von einer vorliegenden oder erwarteten thermischen Belastung des Umrichters und/oder einer psychoakustischen Optimierung des Umrichtermotors priorisierbar. Darüber hinaus können die Zielsetzungen einer vorgebbaren thermischen Belastung, einer psychoakustischen Optimierung und/oder einer Minimierung einer Entladungsaktivität mit einer vorgebbaren Gewichtung verfolgt werden. Dementsprechend können die Steuereinheit und das zugehörige Computerprogrammprodukt dazu ausgebildet sein, entsprechende Optimierungsalgorithmen in vorgebbarer relativer Gewichtung durchzuführen. Hierdurch kann ein Gesamt-Optimum für den Betrieb des Umrichtermotors erreicht werden, das zumindest zwei der bezeichneten Optimierungsziele miteinbezieht. Das Computerprogrammprodukt kann hierzu eine geeignete Künstliche Intelligenz aufweisen.

Darüber hinaus kann die Steuereinheit dazu ausgebildet sein, die Schaltfrequenz des Wechselrichters zum Vorgeben einer Aufteilung von Verlustleistungen am Motor am Umrichter vorzugeben. Je höher die die Schaltfrequenz ist, mit der der Wechselrichter, also die darin angeordneten Halbleiterschaltern, umso höher sind die im Umrichter anfallenden Verluste. Gleichzeitig sind die im Motor anfallenden Verluste umso geringer, je höher die Schaltfrequenz ist, mit der der Umrichter, also dessen Wechselrichter, betrieben wird. Spiegelbildlich sind die im Umrichter anfallenden Verluste umso geringer, je geringer die Schaltfrequenz ist, mit der der Umrichter, also der Wechselrichter, betrieben wird. Korrespondierend sind die am Motor anfallenden Verluste umso höher, je geringer die Schaltfrequenz ist, mit der der Umrichter, also die Halbleiterschalter im Wechselrichter, betrieben wird.

Das Anfallen von Verlusten, also das Auftreten von Verlustleistungen, im Motor und im Umrichter geht dort jeweils mit dem Auftreten von Verlustwärme einher. Durch Vorgeben der Schaltfrequenz des Wechselrichters ist somit vorgebbar, in welchem Maß Verlustwärme im Motor bzw. im Umrichter im Betrieb anfallen. In Abhängigkeit davon, welche Temperatur an einer entsprechenden Komponente im Motor bzw. Umrichter vorliegt und einem dazugehörigen Grenzwert für einen bestimmungsgemäßen Betrieb, kann so der Anfall von Verlustwärme eingestellt werden. Ein derartiger Grenzwert kann als statischer Wert vorgegeben sein, durch eine Tabelle in Abhängigkeit eines weiteren Betriebszustandsgröße, durch einen Algorithmus, und/oder eine Künstliche Intelligenz vorgegeben sein. Dementsprechend ist das thermische Potential des beanspruchten Umrichtermotors, und damit dessen Leistungspotential, stärker ausnutzbar. Hierzu kann die Steuereinheit eine mit einem entsprechend ausgebildeten Computerprogrammprodukt ausgestattet sein.

In einer weiteren Ausführungsform kann der Motor mit einer Messvorrichtung versehen sein, die zu einem Erfassen einer elektrischen Größe ausgebildet ist. Die Messvorrichtung kann als Spannungsmessvorrichtung ausgebildet sein, insbesondere als eine kapazitative Ring-Wellenanordnung, ausgebildet sein. Alternativ oder ergänzend kann eine Strom- und/oder Spannungsmessvorrichtung an den Anschlussklemmen des Motors vorgesehen sein. Die Messvorrichtung kann mit einer Auswertungseinheit versehen sein, die dazu ausgebildet sein, anhand der elektrischen Größe, die mit der Messvorrichtung erfassbar ist, eine Entladungsaktivität am Motor zu erfassen. Entladungsaktivität umfasst hierbei auch Teilentladungen, durch die Isolierungen im Motor beansprucht werden. Der beanspruchte Umrichtermotor kann durch die Erfassung der Entladungsaktivitäten innerhalb der Motorwicklung sowie die Bestimmung der elektrischen Lagerbelastung durch die Welle-Ring-Anordnung und einer damit verbundenen Veränderung von Betriebsparametern, wie beispielsweise Drehzahl, Belastung und Schaltfrequenz mit einer reduzierten Entladungsaktivität betrieben werden. In Verbindung mit der Messvorrichtung ist so eine gesteigerte technisch nutzbare Lebensdauer der Isolierung erzielbar und ausnutzbar.

Ferner kann an zumindest einem der Lager ein Vibrationssensor angeordnet sein, insbesondere an einem Lager, das an einer Nicht-Antriebsseite des Motors angebracht ist. Basierend auf Messwerten, die mit dem Vibrationssensor erfassbar sind, ist ein Abnutzungszustand des entsprechenden Lagers ermittelbar. Der Vibrationssensor kann mit der Auswertungseinheit des Umrichtermotors verbunden sein. Hierzu kann die Auswertungseinheit mit einem Computerprogrammprodukt ausgestattet sein, das dazu eingerichtet ist, Messwerte vom Vibrationssensor zu empfangen, zu verarbeiten und dadurch den Degradationsstand des Lagers zu ermitteln. Des Weiteren können durch die Erfassung von Schwingungen, beispielweise einer Schwinggeschwindigkeit, kritische Schwingungszustände ermittelt werden. Infolgedessen sind Komponenten des Umrichtermotors vor unzulässigen Schwingungsbeanspruchungen schützbar. Dies umfasst auch die Erfassung von applikationsbedingten Schwingungsbelastungen.

In einer weiteren Ausführungsform kann die Auswertungseinheit dazu ausgebildet sein, den Degradationsstand zumindest eines der Lager anhand der Messsignale von der Spannungsmessvorrichtung und dem Vibrationssensor zu ermitteln. Alternativ oder ergänzend kann die Auswertungseinheit dazu ausgebildet sein, eine zu erwartende technisch nutzbare Restlebensdauer des zumindest einen Lagers zu ermitteln. Bei Verwendung von nachgeschmierten Lagern können Nachschmierfristen bedarfsgerecht angepasst werden. Hierzu kann die Auswertungseinheit mit einem entsprechend ausgebildeten Computerprogrammprodukt ausgestattet sein. Die Auswertungseinheit kann als Teil der Steuereinheit des Umrichtermotors ausgebildet sein, also ein Modul dessen sein oder umgekehrt. Dementsprechend ist der beanspruchte Umrichtermotor dazu geeignet, die gesteigerte technisch nutzbare Lebensdauer seiner Lager in erhöhtem Maße bei verringertem Ausfallrisiko auszuschöpfen. Alternativ oder ergänzend können Wartungsarbeiten bedarfsgerecht geplant werden, wodurch ungeplante Ausfallzeiten minimiert werden

Des Weiteren kann die Auswertungseinheit dazu ausgebildet sein, eine technisch nutzbare Restlebensdauer der Isolierung am Rotor und/oder am Stator des Motors vorherzusagen, beispielsweise einer Windungsisolierung. Hierzu können insbesondere Messsignale von der Strom- und Spannungsmessvorrichtung eingesetzt werden. Weiter können hierzu Betriebsprogramme aus der Steuereinheit genutzt werden, durch die ein künftiger Betrieb des Umrichtermotors vorgegeben ist. Ebenso können historische Betriebsdaten des Umrichters verwendet werden, um darauf beispielsweise künftige Betriebs- oder Belastungsprofile des Umrichtermotors zu extrapolieren. Dadurch, dass die eingesetzten Isolierungen bekannt und definiert sind, ist ein exaktes Lebensdauermodell für die Isolierungen bereitstellbar. Darin können die lebensdauerreduzierenden Wirkungen von Teilentladungen auf die Isolierungen präzise nachgestellt und ermittelt werden.

Die zugrundeliegende Aufgabenstellung wird ebenso durch ein erfindungsgemäßes Betriebsverfahren für einen Umrichtermotor gelöst. Der Umrichtermotor weist einen Umrichter, einen Stator und einen Rotor auf, die ein einem Gehäuse angeordnet sind. Das Betriebsverfahren umfasst einen ersten Schritt, in dem der Umrichtermotor in einem aktiven Betriebszustand bereitgestellt wird. Im aktiven Betriebszustand ist der Umrichter mit einer Stromversorgung verbunden und durch Betreiben des Umrichters eine veränderliche elektrische Antriebsleistung für den Motor bereitgestellt. Weiter wird im ersten Schritt zumindest ein Temperaturwert bereitgestellt, der einer Temperatur am Umrichter, am Stator und/oder am Stator entspricht. Dazu kann der Umrichtermotor mit mindestens einem Temperatursensor versehen sein, der an der entsprechenden Komponente die vorliegende Temperatur erfasst. Alternativ oder ergänzend kann der zumindest eine Temperaturmesswert durch ein Temperaturmodell des Umrichtermotors bereitgestellt werden. Das Temperaturmodell kann beispielsweise durch ein Simulationsprogrammprodukt bereitgestellt werden, insbesondere durch einen Digitalen Zwilling des Umrichtermotors.

Zum Betriebsverfahren gehört auch ein zweiter Schritt, in dem ein thermischer Belastungszustand des Umrichters ermittelt wird. Ebenso wird ein thermischer Belastungszustand des Stators und/oder Rotors ermittelt. Der thermische Belastungszustand kann hierbei einen Zusammenhang zwischen dem im ersten Schritt bereitgestellten Temperaturwert und einer maximal erträglichen Temperatur der entsprechenden Komponente wiedergeben. Beispielsweise kann durch den thermischen Belastungszustand angegeben sein, wie weit die thermische Beanspruchbarkeit der entsprechenden Komponente ausgeschöpft ist. In korrespondierender Weise wird im zweiten Schritt ein thermischer Belastungszustand des Rotors und/oder des Stators ermittelt.

In einem dritten Schritt des erfindungsgemäßen Betriebsverfahrens wird zumindest einer der thermischen Belastungszustände, die im zweiten Schritt ermittelt werden, mit einem entsprechenden Grenzwert verglichen. Der Grenzwert kann hierbei einer Temperatur entsprechen, die unterhalb der maximal erträglichen Temperatur der entsprechenden Komponente liegt. Weiter gehört ein vierter Schritt zum beanspruchten Betriebsverfahren, in dem eine Schaltfrequenz des Umrichters verändert wird, wenn der zumindest eine thermische Belastungszustand im dritten Schritt den entsprechenden Grenzwert betragsmäßig übersteigt. Dadurch ist angezeigt, dass der im zweiten Schritt ermittelte thermische Belastungszustand bestimmungswidrig ist und zu vermeiden ist oder, dass Gegenmaßnahmen geboten sind. Durch das Verändern der Schaltfrequenz des Umrichters, also von Halbleiterschaltern in dessen Wechselrichter, ist der Anfall von Wärmeverlusten im Umrichtermotor beeinflussbar. Insbesondere kann durch ein Erhöhen der Schaltfrequenz ein Anfall von Wärmeverlusten im Motor reduziert werden. Gleichzeitig wird hierdurch der Anfall von Wärmeverlusten im Umrichter gesteigert. Entsprechend umgekehrt wirkt ein Reduzieren der Schaltfrequenz.

Das beanspruchte Betriebsverfahren ist dazu geeignet, den Anfall von Wärmeverlusten, und damit von thermischen Belastungszuständen in den Komponenten des Umrichtermotors, zwischen dem Motor und dem Umrichter vorgebbar aufzuteilen. Hierdurch ist das thermische Potential des Umrichtermotors gezielt ausnutzbar.

In einer Ausführungsform des beanspruchten Betriebsverfahrens wird im zweiten Schritt als thermischer Belastungszustand ein vorliegender thermische Belastungszustand des Umrichters, des Stators und/oder des Rotors ermittelt. Das Ermitteln des thermischen Belastungszustands erfolgt basierend auf einem Temperaturmesswert ermittelt. Der erste Temperaturmesswert wird mittels eines Temperatursensors erfasst, der im Umrichtermotor angeordnet ist. Alternativ oder ergänzend können vorliegende thermische Belastungszustände an mehreren Komponenten des Umrichtermotors jeweils basierend auf einem Temperaturmesswert eines Temperatursensors erfasst werden, der der jeweiligen Komponente zugeordnet ist. Die Nutzung von Temperatursensoren erlaubt es, schnell und präzise, entsprechende Temperaturmesswerte bereitzustellen. Weiter alternativ oder ergänzend kann der vorliegende thermische Belastungszustand zumindest einer Komponente des Umrichtermotors mittels eines Temperaturmodells ermittelt werden. Die Nutzung eines Temperaturmodells erlaubt es, mit einer reduzierten Anzahl an Temperatursensoren auszukommen. Das beanspruchte Betriebsverfahren erlaubt es insgesamt, auf eine real vorliegende Betriebssituation in thermischer Hinsicht schnell und zielgerichtet zu reagieren. Je präziser ein eingesetzter Temperatursensor ist, also je besser dieser thermisch angebunden ist, umso stärker ist das thermische Potential des Umrichtermotors ausnutzbar.

Darüber hinaus kann im beanspruchten Betriebsverfahren im zweiten Schritt als thermischer Belastungszustand ein künftiger thermischer Belastungszustand des Umrichters, des Stators bzw. des Rotors ermittelt werden. Der künftige thermische Belastungszustand wird hierbei basierend auf einem geplanten Betriebsparameter des Umrichtermotors ermittelt. Der geplante Betriebsparameter kann beispielsweise durch ein Computerprogrammprodukt bereitgestellt werden, über das der Umrichtermotors angesteuert wird. Hierzu kann beispielweise eine Mustererkennung im aktiven Betrieb des Umrichtermotors durchgeführt werden, durch die der geplante Betriebsparameter vorhersagbar ist. Dementsprechend wird im zweiten Schritt ein bevorstehender bzw. zu erwartender thermischer Belastungszustand ermittelt, der sich einstellt, wenn der aktive Betriebszustand des Umrichtermotors wie geplant bzw. vorhergesagt fortgesetzt wird. Das beanspruchte Betriebsverfahren ist dazu geeignet, in vorausschauender Weise bestimmungswidrige thermische Belastungszustände zu vermeiden. Beispielsweise können bei zyklischen Betriebsabläufen Betriebsunterbrechungen vermieden werden und stattdessen der zyklische Betriebsablauf leistungsvermindert durchgeführt werden. Der Umrichtermotor kann mit einer Künstlichen Intelligenz ausgestattet sein, die dazu trainiert ist, Schaltfrequenzen für einen thermisch optimierten Betrieb vorzugeben.

Ferner kann das beanspruchte Betriebsverfahren einen fünften Schritt aufweisen, in dem ein psychoakustisches Belastungsniveau für den vorliegenden aktiven Betriebszustand ermittelt wird. Ein Computerprogrammprodukt, mit dem das Betriebsverfahren ausgeführt wird, kann hierzu mit einem Berechnungsmodell ausgestattet sein, das dazu eingerichtet ist, akustische Emissionen des Umrichtermotors in vorgebbaren Betriebssituationen vorherzusagen. In einem sechsten Schritt wird ein psychoakustischer Optimierungsalgorithmus durchgeführt. Der psychoakustische Optimierungsalgorithmus kann dazu ausgebildet sein, durch Variieren von Betriebsparametern aktive Betriebszustände zu ermitteln, in denen das psychoakustische Belastungsniveau niedriger ist als im vorliegenden aktiven Betriebszustand. Weiter wird im sechsten Schritt ein Ansteuerverhalten des Umrichters in Abhängigkeit vom psychoakustischen Optimierungsalgorithmus verändert. Hierdurch stellt sich im sechsten Schritt ein veränderter aktiver Betriebszustand ein. Die psychoakustische Optimierung kann hierbei in Abhängigkeit vom vorliegenden oder künftigen thermischen Belastungszustand priorisiert durchgeführt werden. Beispielsweise kann eine psychoakustische Optimierung vordringlich durchgeführt werden, wenn hinreichende thermische Reserven des Umrichters vorliegen. Umgekehrt kann eine psychoakustische Optimierung hinten angestellt werden, wenn ein kritischer thermischer Belastungszustand vorliegt oder bevorsteht.

In einer weiteren Ausführungsform des beanspruchten Betriebsverfahrens kann der Umrichtermotor, an dem es durchgeführt wird, gemäß einer der oben dargestellten Ausführungsformen ausgebildet sein. Ein derartiger Umrichtermotor ist aufgrund seines Aufbaus in besonderer Weise geeignet, das beanspruchte Betriebsverfahren durchzuführen. Insbesondere wird durch die niederimpedante elektrische Verbindung zwischen dem Umrichter und dem Motor und der definierten Kombination von Umrichter und Motor eine gezielte Ermittlung von thermischen Belastungszuständen erfolgen und durch ein Verändern der Schaltfrequenz des Umrichters ein vorliegender oder bevorstehende thermischer Belastungszustand beeinflussbar ist. Die Merkmale des beanspruchten Umrichtermotors sind einzeln oder in Kombination auf der beanspruchte Betriebsverfahren übertragbar und umgekehrt.

Ferner wird die oben skizzierte Aufgabe durch ein erfindungsgemäßes Computerprogrammprodukt gelöst. Das Computerprogrammprodukt ist dazu ausgebildet, zumindest einen Steuerbefehl für eine Komponente eines Umrichtermotors zu ermitteln und auszugeben. Das Computerprogrammprodukt kann ferner dazu ausgebildet sein, Messwerte, beispielsweise von einem Temperatursensor zu empfangen und zu verarbeiten. Das Computerprogrammprodukt kann zum Ausgeben von Steuerbefehlen bzw. Empfangen von Messwerten über entsprechend geeignete Datenschnittstellen verfügen. Weiter kann das Computerprogrammprodukt auf einem nichtflüchtigen Speicher gespeichert sein und ausführbaren Code umfassen. Erfindungsgemäß ist das Computerprogrammprodukt dazu ausgebildet, zumindest eine Ausführungsform des oben skizzierten Betriebsverfahrens durchzuführen. Alternativ oder ergänzend kann das Computerprogrammprodukt dazu ausgebildet sein, einen Umrichtermotor nach einer der oben dargestellten Ausführungsformen zu betreiben. Die Merkmale des Betriebsverfahrens und des Umrichtermotors sind dementsprechend auf das beanspruchte Computerprogrammprodukt übertragbar.

Die zugrundeliegende Aufgabenstellung wird ebenso durch ein erfindungsgemäßes Simulationsprogrammprodukt gelöst. Das Simulationsprogrammprodukt umfasst Befehle, die einen Computer dazu veranlassen, ein Betriebsverhalten eines Umrichtermotors nachzustellen, wenn die Befehle ausgeführt werden. Das Simulationsprogrammprodukt kann hierbei auf einem nicht-flüchtigen Speicher, beispielsweise einer Festplatte, einem Flash-Speicher oder einem optischen Speichermedium, gespeichert sein. Erfindungsgemäß ist der Umrichtermotor, dessen Betriebsverhalten mit dem Simulationsprogrammprodukt nachstellbar ist, gemäß einer der oben skizzierten Ausführungsformen ausgebildet. Die Merkmale des beanspruchten Umrichtermotors und deren technische Vorteile sind ohne Weiteres auf das beanspruchte Simulationsprogrammprodukt übertragbar.

Das Simulationsprogrammprodukt kann dazu ausgebildet sein, ein Simulationsverfahren durchzuführen, zu dem die folgenden Schritte gehören:
In einem ersten Schritt wird eine Mehrzahl an Datenpunkten bereitgestellt, durch die der zu simulierende Umrichtermotor zumindest teilweise abgebildet ist. Die Mehrzahl an Datenpunkten können dazu ausgebildet sein, den Aufbau und/oder die Funktionsweise des zu simulierenden Umrichtermotors nachzustellen. Die Mehrzahl an Datenpunkten kann beispielsweise auch ein Rechenmodell des zu simulierenden Umrichtermotors sein. Die Mehrzahl an Datenpunkten bildet im Wesentlichen eine virtuelle Repräsentation des zu simulierenden Umrichtermotors. In einem zweiten Schritt wird ein Betriebsparameter vorgegeben, durch den das zu simulierende Betriebsverhalten charakterisiert ist. Der Betriebsparameter kann beispielsweise eine abgegebene Leistung des Motors des Umrichtermotors, dessen Umgebungstemperatur und/oder ein elektrisches Verhalten eines Stromnetzes umfassen, durch das der Umrichtermotor mit Energie versorgt wird. Ferner kann der Betriebsparameter eine Schaltfrequenz des Wechselrichters, also von zumindest einem darin angeordneten Halbleiterschalter, sein. Durch den zumindest einen Betriebsparameter ist im Wesentlichen eine zu simulierende Betriebssituation des Umrichtermotors beschreibbar.

In einem darauffolgenden dritten Schritt wird zumindest ein Leistungsparameter basierend auf der Mehrzahl an Datenpunkten und dem zumindest einen Betriebsparameter ermittelt. Der Leistungsparameter kann beispielsweise ein Messsignal sein, das durch die Spannungsmessvorrichtung und/oder den Vibrationssensor erzeugt wird. Alternativ oder ergänzend kann der Leistungsparameter auch eine zu erwartende Restlebensdauer einer Isolierung am Rotor und/oder Stator sein, oder ein Degradationszustand eines Lagers. Weiter alternativ oder ergänzend kann der Leistungsparameter eine an einer Komponente des Umrichtermotors auftretende Wärmeverluste sein und/oder ein aktueller Wirkungsgrad des Umrichtermotors. Zum Ermitteln des zumindest einen Leistungsparameters kann das Simulationsprogrammprodukt über ein Physik-Modul verfügen, mit dem beispielsweise eine Wärmefreisetzung in Komponenten des Umrichtermotors, also dessen virtueller Repräsentation, nachstellbar ist, und/oder auch eine elektrische Größe eines Lagerstroms in einem der Lager des Umrichtermotors. In einem darauffolgenden vierten Schritt wird der im dritten Schritt ermittelte Leistungsparameter an einen Benutzer und/oder eine Datenschnittstelle ausgegeben. Das Simulationsprogrammprodukt kann über die Datenschnittstelle beispielsweise mit einer übergeordneten Steuereinheit eines Automatisierungssystems verbunden sein, in dem der zu simulierende Umrichtermotor angeordnet ist. Die Datenschnittstelle kann hierbei als sogenanntes Application Programming Interface, kurz API, ausgebildet sein. Ferner kann das Simulationsprogrammprodukt eine Datenschnittstelle mit dem zu simulierenden Umrichtermotor verbunden sein, und dadurch Daten empfangen, die mit dem zumindest einen Leistungsparameter und/oder dem zumindest einen Betriebsparameter korrespondieren. Dementsprechend kann das Simulationsprogrammprodukt als Digitaler Zwilling ausgebildet sein. Der Digitale Zwilling ist hierbei im Sinne von US 2017/286572 A1 aufzufassen. Der Offenbarungsgehalt von US 2017/286572 A1 wird durch Verweisung in die vorliegende Anmeldung miteinbezogen.

Der zugrundeliegende Aufbau des Umrichtermotors erlaubt es, in einfacher Weise Lagerströme zu minimieren. Ebenso wird eine Teilentladungsaktivität im Motor minimiert, so dass dessen Isolierungen geschont werden. Ferner werden Lagerströme durch die Lager des Motors reduziert. Dementsprechend sind die Einwirkungen von Lagerströmen auf ein Degradationsverhalten der Lager vernachlässigbar. Alternativ oder ergänzend sind die elektrischen Belastungen der Lager infolge der Lagerströme als Degradationskomponente vereinfacht beschreibbar. Infolgedessen kann das beanspruchten Simulationsprogrammprodukt auf einem vereinfachten Degradationsmodell für die Lager beruhen, das die Wirkung von Lagerströmen ignoriert. Für derartige Anwendungsfälle existieren Modelle mit hoher Vorhersagegenauigkeit. Dementsprechend bietet das beanspruchte Simulationsprogrammprodukt ein erhöhtes Maß an Realitätstreue. Weiter kommt das beanspruchte Simulationsprogrammprodukt mit relativ geringem Rechenaufwand aus, was wiederum zu einer besonders schnellen Simulation führt. Das beanspruchte Simulationsprogrammprodukt kann dadurch auch Echtzeitfähigkeit erreichen, also betriebsbegleitend ablaufen. Dadurch ist der zugrundeliegende Umrichtermotor präziser überwachbar, was wiederum einen besonders effizienten Betrieb erlaubt. Der Betrieb eines Automatisierungssystems, das mit einem solchen Simulationsprogrammprodukt ausgestattet ist, wird somit insgesamt sicherer und effizienter.

Die Erfindung wird im Folgenden anhand einzelner Ausführungsform in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die Merkmale der in den Figuren gezeigten Ausführungsformen mit den oben skizzierten Merkmalen kombinierbar. Es zeigen im Einzelnen:
- FIG 1: einen schematischen Aufbau einer Ausführungsform des beanspruchten Umrichtermotors;
- FIG 2: einen weiteren schematischen Aufbau der Ausführungsform des beanspruchten Umrichtermotors;
- FIG 3: eine schematische Darstellung eines Ablaufs einer Ausführungsform des beanspruchten Betriebsverfahrens.

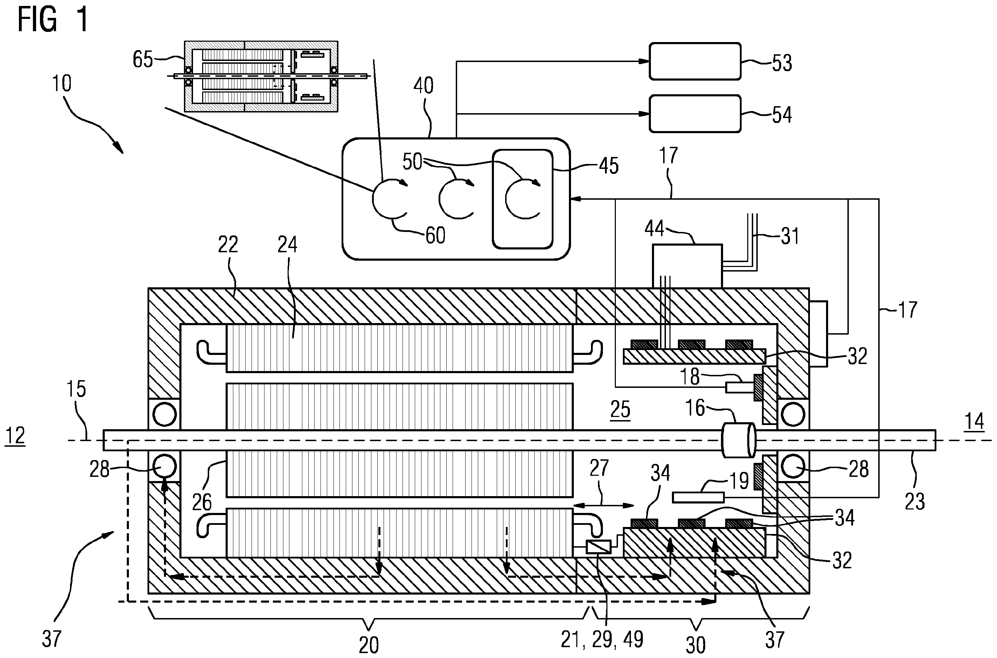

In FIG 1 ist schematisch eine Ausführungsform des beanspruchten Umrichtermotors 10 in einem Längsschnitt gezeigt. Zum Umrichtermotor 10 gehören im Wesentlichen ein Motor 20 und ein Umrichter 30, die in einem Gehäuse 22 angeordnet sind. Zum Motor 20 gehören ein Stator 24 und ein Rotor 26, der auf einer Rotorwelle 23 angebracht ist. Die Rotorwelle 23 ist in zwei Lagern 28 aufgenommen und in diesen um eine Drehachse 15 drehbar gelagert. Die Lager 28 sind in der Wandung des Gehäuses 22 auf einer Antriebsseite 12 und einer Nicht-Antriebsseite 14 des Umrichtermotors 10 aufgenommen. Der Stator 24 und der Rotor 26, also die aktiven Komponenten des Motors 20, sind entlang der Axialrichtung, also entlang der Drehachse 15 betrachtet, zwischen den Lagern 28 angeordnet. Der Umrichter 30 und seine Komponenten, zu denen Leiterplatten 32 mit Halbleiterschaltern 34 gehören, ist ebenfalls in Axialrichtung zwischen den Lagern 28 angeordnet. Der Umrichter 30, also die Gesamtheit seiner Komponenten, ist in einem gemeinsamen Motorraum 25 wie der Stator 24 und der Rotor 26 angeordnet. Ein räumlicher Abstand 27 zwischen dem Umrichter 30 und dem Rotor 26 bzw. dem Stator 24, also entlang der Axialrichtung, ist minimiert. Des Weiteren ist der Zwischenraum zwischen dem Stator 24 trennwandungsfrei ausgebildet. Der Umrichter 30, also eine seiner Leiterplatten 32, ist über einen Steckkontakt 21 unmittelbar mit dem Stator 24, also einer zugehörigen Statorwicklung, elektrisch verbunden. Im Bereich des Steckkontakts 21 kann ein High Frequency Current Transducer 49, kurz HFCT, angeordnet sein, mit dem eine Teilentladungsaktivität in einer der Motorwicklungen erfassbar ist. Alternativ oder ergänzend kann ein Temperatursensor 19 als Antenne eingesetzt werden, um Teilentladungsaktivitäten zu erfassen. Infolgedessen liegt zwischen dem Umrichter 30 und dem Stator 24 eine reduzierte Impedanz 29 vor, die geringer ist als eine Impedanz 37 zwischen dem Umrichter 30 und jeweils den Lagern 28. Die Impedanzen 37 zwischen dem Umrichter 30 und den Lagern 28 sowie die Impedanz 29 zwischen dem Umrichter 30 und dem Stator 24 sind in FIG 1 durch unterbrochene Pfeile versinnbildlicht. Dadurch sind Lagerströme, also elektrische Ströme durch die Lager 28, in einem bestimmungsgemäßen Betrieb des Umrichtermotors 10 minimiert.

Der Umrichtermotor 10 verfügt über einen Klemmenkasten 44, über den der Umrichter 30 mit einem Stromnetz 31 elektrisch verbunden ist. Der Umrichtermotor 10 ist weiter mit zumindest einem Temperatursensor 19 ausgestattet, der zum Erfassen einer Temperatur an einer Komponente des Umrichters 30, beispielsweise an einer Leiterplatte 32 mit Halbleiterschaltern 34, angeordnet ist. Der Temperatursensor 19 ist dazu ausgebildet, Messsignale 17 an eine Auswertungseinheit 45 zu übertragen, die zu einer Steuereinheit 40 des Umrichtermotors 10 gehört. Die Steuereinheit 40 kann innerhalb des Umrichtermotors 10 angeordnet sein oder außerhalb. Ferner verfügt der Umrichtermotor 10 über eine Messvorrichtung 16, die an der Rotorwelle 23 als Welle-Ring-Anordnung angebracht ist und die als Spannungsmessvorrichtung ausgebildet ist. Die Messvorrichtung 16 ist ebenfalls mit der Auswertungseinheit 45 in der Steuereinheit 40 verbunden und dazu geeignet, Messsignale 17 an die Auswertungseinheit 45 zu übertragen. Die Messvorrichtung 16 ist dazu ausgebildet, Lagerströme am zugehörigen Lager 28 und/oder Entladungsaktivitäten daran zu erfassen. Darüber hinaus ist der Umrichtermotor 10 mit einem Vibrationssensor 18 versehen, der dazu ausgebildet ist, im Bereich des Lagers 28 Vibrationen zu erfassen. Ausgehend hiervon ist ein Degradationsstand des zugehörigen Lagers 28 ermittelbar. Der Degradationsstand kann auch unter Einbeziehung erfasster elektrischer Belastungen der Lager 28 ermittelt werden. Die Messsignale 17 vom Vibrationssensor 18 werden ebenfalls an die Auswertungseinheit 45 in der Steuereinheit 40 übertragen. Die empfangenen Messsignale 17 sind einzeln oder in Kombinationen durch ein Computerprogrammprodukt 50 verarbeitbar, das funktional zur Auswertungseinheit 45 gehört. Weiter ist die Steuereinheit 40 mit einem Computerprogrammprodukt 50 ausgestattet, das dazu ausgebildet ist, nicht näher gezeigte Steuerbefehle an dem Umrichtermotor 10, insbesondere dessen Umrichter 30, zu senden. Das Computerprogrammprodukt 50 ist dazu ausgebildet, mit dem Computerprogrammprodukt 50 in der Auswertungseinheit 45 zusammenzuwirken.

Darüber hinaus läuft auf der Steuereinheit 50 ein Simulationsprogrammprodukt 60 ab, das dazu ausgebildet ist, das Betriebsverhalten des Umrichtermotors 10 nachzustellen, also zu simulieren. Das Simulationsprogrammprodukt 60 weist hierzu einen Digitalen Zwilling 65 des Umrichtermotors 10 auf. Das Simulationsprogrammprodukt 60 ist mit der Messvorrichtung 16, dem Vibrationssensor 18 und/oder dem Temperatursensor 19 gekoppelt und dazu geeignet, deren Messsignale 17 als Ist-Zustand mit einem Zustand des Digitalen Zwillings 65 zu vergleichen. Die Steuereinheit 40 ist ferner mit einer Datenschnittstelle 53 verbunden, die dazu ausgebildet ist, einen ermittelten Degradationsstand und/oder eine zu erwartende technisch nutzbare Restlebensdauer einer Komponente des Umrichtermotors 10 auszugeben, beispielsweise an eine übergeordnete Steuereinheit eines Automatisierungssytems, zu dem der Umrichtermotor 10 gehört. Alternativ oder ergänzend ist ein Zustand des Digitalen Zwillings 65 über die Datenschnittstelle 53 ausgebbar. Ebenso ist die Steuereinheit 40 mit einer Anzeigeeinheit 54 verbunden, über die ebenfalls ein ermittelter Degradationsstand und/oder eine zu erwartende technisch nutzbare Restlebensdauer einer Komponente des Umrichtermotors 10 ausgebbar ist, beispielsweise an eine übergeordnete Steuereinheit eines Automatisierungssytems, zu dem der Umrichtermotor 10 gehört. Des Weiteren kann auch ein Zustand des Digitalen Zwillings 65 über die Anzeigeeinheit 54 ausgegeben werden.

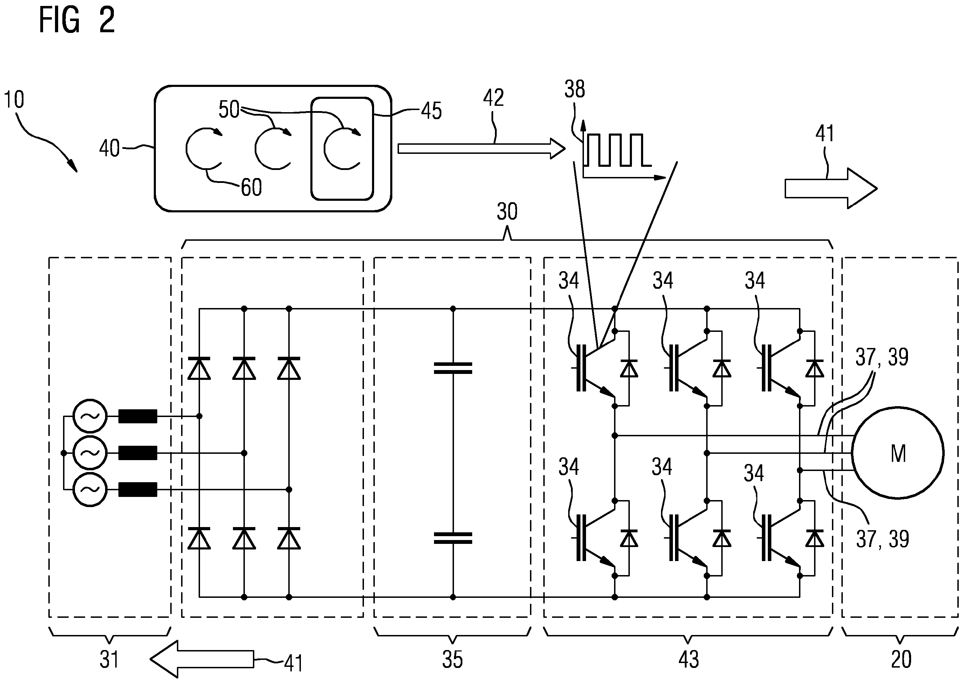

Der Umrichtermotor 10 gemäß der Ausführungsform in FIG 1 ist in FIG 2 schematisch näher dargestellt. Insbesondere ist der elektrische Aufbau des beanspruchten Umrichtermotors 10 in FIG 2 näher gezeigt. Der Umrichtermotor 10 ist mit einem Stromnetz 31 verbunden, über das der Umrichtermotor 10 mit Energie versorgt wird. Der Umrichtermotor 10 umfasst einen Motor 20, der über den Umrichter 30 mit Energie versorgt wird. Der Umrichter 30 weist einen Zwischenkreis 35 und einen Wechselrichter 43 auf, in dem dessen Halbleiterschalter 34 angeordnet sind. Der Motor 20 ist über den Steckkontakt 21 mit dem Umrichter 30 verbunden, der eine reduzierte Impedanz 29 aufweist. Die Impedanz 29 zwischen dem Stator und dem Zwischenkreis 35 ist hierbei geringer als eine Impedanz 37 zwischen dem Umrichter 30 und den Lagern 28 des Motors 20, wie in FIG 1 dargestellt. Hierdurch werden Ströme aus dem Stator 24 durch die Lager 28 zurück in den Umrichter 30 vermieden, wobei entlang dieses Weges eine erhöhte Impedanz 37 vorliegt. Stattdessen können Ströme aus dem Stator 24 durch das Gehäuse 22 direkt in den Umrichter 30 fließen. Dadurch sind Lagerströme durch die Lager 28, wie in FIG 2 gezeigt, insgesamt minimiert oder sogar verhindert.

Durch ein Betätigen der Halbleiterschalter 34 wird dem Motor 20 im bestimmungsgemäßen Betrieb eine pulsweitenmodulierte Spannung bereitgestellt, welche im Sinne einer frequenz- und amplitudenvariablen Spannung in einem damit vorgebbaren Motorstrom resultiert. Die Halbleiterschalter 34 sind über eine Steuereinheit 40 des Umrichtermotors 10 mittels Steuerbefehlen 42 ansteuerbar, also schaltbar. Im bestimmungsgemäßen Betrieb erfolgt das Betätigen der Halbleiterschalter 34 mit einer vorgebbaren Schaltfrequenz 38. In Abhängigkeit von der Höhe der Schaltfrequenz 38 erfolgt ein unterschiedlich starker Anfall von Verlustleistungen, also Erwärmungen, im Motor 20 bzw. im Umrichter 30. Die Steuereinheit 40 ist dazu ausgebildet, in vorgebbarer Weise die Schaltfrequenz 38 einzustellen und so das Erwärmungsverhalten des Motors 20 und/oder Umrichters 30 zu beeinflussen. Weiter wirken sich elektrische Rückwirkungen 41 aus dem Motor 20 im Wesentlichen in den Zwischenkreis 35 aus und führen höchstens in minimalem Umfang zu Lagerströmen. Dadurch ist der beanspruchte Umrichtermotor 10 in besonders effizienter Weise betreibbar.

Die Steuereinheit 40 umfasst eine Auswertungseinheit 45, die mittels eines darauf ablaufenden Computerprogrammprodukts 50 dazu ausgebildet ist, Messsignale 17 von der Messvorrichtung 16, dem Vibrationssensor 18, dem High Frequency Current Transducer 49 und/oder dem Temperatursensor 19, wie in FIG 1 gezeigt, zu empfangen und zu verarbeiten. Das Computerprogrammprodukt 50 in der Auswertungseinheit 45 wirkt hierbei mit dem Computerprogrammprodukt 50 auf der Steuereinheit 40 zusammen. Ferner wird der Zustand des Umrichtermotors 10 zu dessen Überwachung in einem Simulationsprogrammprodukt 60 nachgestellt, also dessen Betrieb simuliert.

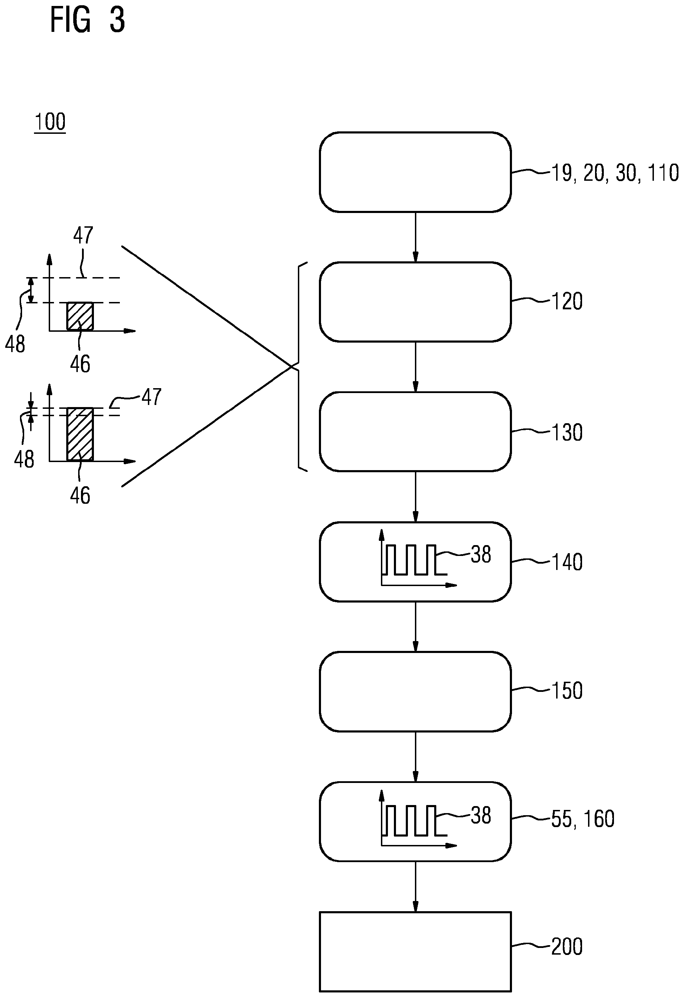

Eine Ausführungsform des beanspruchten Betriebsverfahrens 100 für einen Umrichtermotor 10 ist schematisch in FIG 3 dargestellt. Das Betriebsverfahren 100 wird mittels zumindest eines Computerprogrammprodukts 50 durchgeführt, das auf einer Auswertungseinheit 45 und/oder einer Steuereinheit 40 des Umrichtermotors 10 ausführbar gespeichert ist. Der Umrichtermotor 10 kann hierbei beispielsweise gemäß FIG 1 und/oder FIG 2 ausgebildet sein. Das Betriebsverfahren weist einen ersten Schritt 110 auf, in dem der Umrichtermotor 10 in einem aktiven Betriebszustand bereitgestellt wird. Im aktiven Betriebszustand wird der Motor 20 des Umrichtermotors 10 durch dessen Umrichter 30 mit einer Antriebsleistung gespeist. Ebenso wird im ersten Schritt 110 ein Temperaturwert bereitgestellt, der einer Temperatur am Umrichter 30, am Stator 24 und/oder am Rotor 20 des Umrichtermotors 10 entspricht. Der Temperaturwert wird hierbei von einem Temperatursensor 19 im Gehäuse 22 des Umrichtermotors 10 und/oder durch einen Algorithmus bereitgestellt, beispielsweise einem Digitalen Zwilling 65 des Umrichtermotors 10.

In einem zweiten Schritt 120 des Betriebsverfahrens 100 wird ein thermischer Belastungszustand des Umrichters 30 ermittelt. Ebenso wird ein thermischer Belastungszustand 46 des Stators 24 und/oder Rotors 26 des Umrichtermotors 10 ermittelt. Zur Ermittlung zumindest eines thermischen Belastungszustands 46 kann der Temperaturwert eingesetzt werden, der im ersten Schritt 110 bereitgestellt wird. Der thermische Belastungszustand 46 kann sich beispielsweise aus der Temperatur der vorliegenden Komponente ergeben und der bisherigen Dauer, für die die Komponente der entsprechenden Temperatur unterworfen gewesen ist. Ferner kann der thermische Belastungszustand 46 einem erwarteten Zustand der entsprechenden Komponente entsprechen, der zu erwarten ist, wenn ein geplanter Betrieb des Umrichtermotors 10 plangemäß fortgesetzt wird. Weiter werden in einem dritten Schritt 130 die ermittelten thermischen Belastungszustände 46 jeweils mit einem Grenzwert 47 verglichen. Gemäß FIG 3 ergibt sich, dass der thermische Belastungszustand 46 des Umrichters 39 den Grenzwert 47 betragsmäßig übersteigt. Ebenso ergibt sich in FIG 3, dass der thermische Belastungszustand 46 des Stators 24 und des Rotors 26 betragsmäßig unterhalb des Grenzwerts 47 liegt.

Zum Betriebsverfahren 100 gehört darüber hinaus ein vierter Schritt 140, in dem eine Schaltfrequenz 38 von Halbleiterschaltern 34 des Umrichters 30 verändert wird. Im Fall nach FIG 3 wird die Schaltfrequenz 38 reduziert, so dass der Anfall von Wärmeverlusten im Umrichter 30 reduziert wird, also dessen thermischer Belastungszustand 46 reduziert wird. In korrespondierender Weise wird der thermische Belastungszustand 46 des Stators 24 und des Rotors 26 erhöht. Durch den Aufbau des Umrichtermotors 10, wie exemplarisch in FIG 1 und FIG 2 gezeigt, ist es möglich, mit dem Betriebsverfahren 100, insbesondere dem ersten, zweiten, dritten und vierten Schritt 110, 120, 130, 140 die thermischen Belastungszustände 46 im Umrichtermotor 10 präzise vorzugeben. Insbesondere ist ein Reduzieren eines thermischen Belastungszustands 46 einer Komponente zulasten einer anderen Komponente in exakt vorgebbarer Weise möglich.

Das Betriebsverfahren 100 weist ferner einen fünften Schritt 150 auf, in dem ein psychoakustisches Belastungsniveau 56 ermittelt wird, das im aktiven Betriebszustand vorliegt. Weiter wird in einem sechsten Schritt 160 ein psychoakustischer Optimierungsalgorithmus 55 durchgeführt und ein Ansteuerverhalten des Umrichters 30, beispielsweise dessen Schaltfrequenz 38, verändert. Das Ansteuerverhalten wird hierbei in Abhängigkeit vom psychoakustischen Optimierungsalgorithmus 55 durchgeführt. Durch den Aufbau des Umrichtermotors 10, wie unter anderem in FIG 1 oder FIG 2 gezeigt, weist dieser einen vergrößerten Spielraum auf, um eine psychoakustische Optimierung durchzuführen. Infolge der psychoakustischen Optimierung sind Geräuschemissionen in Frequenzbereichen reduzierbar, die für das menschliche Gehör unangenehm sind. Der fünfte und sechste Schritt 150, 160 können in Abhängigkeit von den thermischen Belastungszuständen 46 priorisiert durchgeführt werden. Das beanspruchte Betriebsverfahren 100 ist zu einem selbsttätigen Anpassen an unterschiedliche Betriebszustände geeignet und bietet zusätzlich ein gesteigertes Komfortniveau. Nach Abschluss der bezeichneten Schritte 110, 120, 130, 140, 150, 160 erreicht das Betriebsverfahren 100 einen Endzustand 200.

### Bezugszeichenliste

- 10: Umrichtermotor
- 12: Antriebsseite
- 14: Nicht-Antriebsseite
- 15: Drehachse
- 16: Messvorrichtung
- 17: Messsignale
- 18: Vibrationssensor
- 19: Temperatursensor
- 20: Motor
- 22: Gehäuse
- 23: Rotorwelle
- 24: Stator
- 25: Motorinnenraum
- 26: Rotor
- 27: Abstand
- 28: Lager
- 29: Zwischenraum
- 30: Umrichter
- 31: Rückwirkungen
- 32: Umrichterkomponente
- 33: Netz
- 34: Halbleiterschalter
- 35: Zwischenkreis
- 36: Leitungen
- 37: Impedanz
- 38: Schaltfrequenz
- 39: Leitungen
- 40: Steuereinheit
- 42: Steuerbefehl
- 45: Auswertungseinheit
- 50: Computerprogrammprodukt
- 53: Datenschnittstelle
- 54: Anzeigeeinheit
- 60: Simulationsprogrammprodukt
- 65: Digitaler Zwilling

## Patentansprüche

1. Umrichtermotor (10), umfassend ein Gehäuse (22), einen Motor (20) mit einem Stator (24) und einem Rotor (26) auf einer Rotorwelle (23), die auf zwei Lagern (28) drehbar gelagert ist, und einen Umrichter (30), wobei der Stator (24), der Rotor (26) und der Umrichter (30) im Gehäuse (22) aufgenommen sind, **dadurch gekennzeichnet, dass** der Umrichter (30) mit dem Rotor (26) und dem Stator (24) in einem gemeinsamen Motorraum (25) im Gehäuse (22) zwischen den Lagern (28) angeordnet ist.

2. Umrichtermotor (10) nach Anspruch 1, **dadurch gekennzeichnet, dass** ein Zwischenraum zwischen dem Umrichter (30) und dem Rotor (26) trennwandungsfrei ausgebildet ist.

3. Umrichtermotor (10) nach Anspruch 1 oder 2, **dadurch gekennzeichnet, dass** zumindest ein Temperatursensor (19) zum Erfassen einer Betriebstemperatur des Umrichters (30), des Stators (24) und/oder des Rotors (26) im Gehäuse (22) angeordnet ist und eine Steuereinheit (40) des Umrichtermotors (10) dazu ausgebildet ist, in Abhängigkeit von Messwerten des zumindest einen Temperatursensors (19) eine Schaltfrequenz (38) des Zwischenkreises (35) des Umrichters (30) vorzugeben.

4. Umrichtermotor (10) nach einem der Ansprüche 1 bis 3, **dadurch gekennzeichnet, dass** die Steuereinheit (40) dazu ausgebildet ist, eine Schaltfrequenz (38) des Wechselrichters (43) zur psychoakustischen Optimierung einer Geräuschemission des Umrichtermotors (10) anzupassen und vorzugeben.

5. Umrichtermotor (10) nach einem der Ansprüche 1 bis 4, **dadurch gekennzeichnet, dass** die Steuereinheit (40) dazu ausgebildet ist, die Schaltfrequenz (38) des Wechselrichters (43) zum Vorgeben einer Aufteilung von Verlustleistungen am Motor (20) und am Umrichter (30) vorzugeben.

6. Umrichtermotor (10) nach einem der Ansprüche 1 bis 5, **dadurch gekennzeichnet, dass** der Motor (20) mit einer Messvorrichtung (16) zu einem Erfassen einer elektrischen Größe ausgebildet ist und die Steuereinheit (40) dazu ausgebildet ist, anhand der elektrischen Größe eine Entladungsaktivität an einer Isolierung zu erfassen.

7. Umrichtermotor (10) nach Anspruch 6, **dadurch gekennzeichnet, dass** die Messvorrichtung (16) als Spannungsmessvorrichtung, insbesondere als eine Ring-Wellen-Anordnung zur berührungslosen Spannungsmessung ausgebildet ist.

8. Umrichtermotor (10) nach einem der Ansprüche 1 bis 7, **dadurch gekennzeichnet, dass** an zumindest einem der Lager (28) ein Vibrationssensor (18) angeordnet ist.

9. Umrichtermotor (10) nach Anspruch 7 und 8, **dadurch gekennzeichnet, dass** der Umrichtermotor (10) eine Auswertungseinheit (45) aufweist, die dazu ausgebildet ist, anhand von Messsignalen (17) von der Spannungsmessvorrichtung und vom Vibrationssensor (18) einen Degradationsstand und/oder eine zu erwartende technisch nutzbare Restlebensdauer des zumindest einen Lagers (28) zu ermitteln.

10. Umrichtermotor (10) nach einem der Ansprüche 1 bis 9, **dadurch gekennzeichnet, dass** die Auswertungseinheit (45) dazu ausgebildet ist, eine technisch nutzbare Restlebensdauer einer Isolierung am Rotor (26) und/oder Stator (24) vorherzusagen.

11. Betriebsverfahren (100) für einen Umrichtermotor (10), der einen Motor (20) mit einem Stator (24) und einem Rotor (26) und einen Umrichter (30) aufweist, umfassend, die Schritte:
a) Bereitstellen des Umrichtermotors (10) in einem aktiven Betriebszustand und Bereitstellen eines Temperaturwerts einer Temperatur am Umrichter (30), am Stator (24) und/oder am Rotor (26);
b) Ermitteln eines thermischen Belastungszustands (46) des Umrichters (30) und Ermitteln eines thermischen Belastungszustands (46) des Stators (24) und/oder des Rotors (26);
c) Vergleichen zumindest eines der thermischen Belastungszustände (46) mit einem entsprechenden Grenzwert (47);
d) Verändern einer Schaltfrequenz (38) des Umrichters (30), wenn der zumindest eine thermische Belastungszustand (46) in Schritt c) den entsprechenden Grenzwert (47) betragsmäßig übersteigt.

12. Betriebsverfahren (100) nach Anspruch 11, **dadurch gekennzeichnet, dass** im Schritt b) als thermischer Belastungszustand (46) ein vorliegender thermischer Belastungszustand (46) des Umrichters (30), des Stators (24) bzw. Rotors (26) basierend auf einem Temperaturmesswert ermittelt wird, der im Schritt a) mittels eines Temperatursensors (19) erfasst wird.

13. Betriebsverfahren (100) nach Anspruch 11 oder 12, **dadurch gekennzeichnet, dass** im Schritt b) als thermischer Belastungszustand (46) ein künftiger thermischer Belastungszustand (46) des Umrichters (30), des Stators (24) bzw. Rotors (26) basierend auf einem geplanten Betriebsparameter des Umrichtermotors (10) ermittelt wird.

14. Betriebsverfahren (100) nach einem der Ansprüche 11 bis 13, **dadurch gekennzeichnet, dass** das Betriebsverfahren (100) weiter die Schritte umfasst:
e) Ermitteln eines psychoakustischen Belastungsniveaus (56) des vorliegenden aktiven Betriebszustands;
f) Durchführen eines psychoakustischen Optimierungsalgorithmus (55) und Verändern eines Ansteuerverhaltens des Umrichters (30) in Abhängigkeit vom psychoakustischen Optimierungsalgorithmus (55).

15. Betriebsverfahren (100) nach einem der Ansprüche 11 bis 14, **dadurch gekennzeichnet, dass** der Umrichtermotor (10) nach einem der Ansprüche 1 bis 10 ausgebildet ist.

16. Computerprogrammprodukt (50) zum Ansteuern eines Umrichtermotors (10), das zum Ausgeben zumindest eines Steuerbefehls an eine Komponente des Umrichtermotors (10) ausgebildet ist, **dadurch gekennzeichnet, dass** das Computerprogrammprodukt (50) zum Durchführen eines Betriebsverfahrens (100) nach einem der Ansprüche 11 bis 15 ausgebildet ist.
